# EUROPÄISCHE PATENTSCHRIFT

(11) **EP 1 627 795 B1**
(45) Veröffentlichungstag und Bekanntmachung des Hinweises auf die Patenterteilung: **19.01.2011**
(21) Anmeldenummer: 05016731.1
(22) Anmeldetag: 02.08.2005
(51) Int. Cl.: B62D 1/16, F16B 17/00

(54) **Befestigung eines Lenksäulenmoduls**
Fixation of a steering column module
Fixation d'un module de colonne de direction

(30) Priorität: 19.08.2004 DE 102004041069
(43) Veröffentlichungstag der Anmeldung: 22.02.2006
(73) Patentinhaber: Valeo Schalter und Sensoren GmbH, 74321 Bietigheim-Bissingen (DE)
(72) Erfinder: Hasch, Martin, 71701 Schwieberdingen (DE); Lipfert, Rainer, 74076 Heilbronn (DE); Simonis, Karl, 75428 Illingen (DE); Grüner, Roland, 71732 Tamm (DE); Binder, Bernd, 71679 Asperg (DE)
(74) Vertreter: Pothmann, Karsten

(56) Entgegenhaltungen:
- EP-A- 1 213 180
- EP-A- 1 418 111
- DE-A1- 10 244 245
- DE-B3- 10 259 167

## Beschreibung

Die Erfindung betrifft ein Lenksäulenmodul zur Anordnung im Bereich des Lenkstocks eines Fahrzeugs, mit einer im Gehäuse des Lenksäulenmoduls angeordneten zentralen Aussparung für ein die Lenkwelle wenigstens abschnittsweise umgebendes Mantelelement.

Zur Befestigung von Lenksäulenmodulen an derartigen Mantelelementen, die beispielsweise als Mantelrohr der Lenksäule ausgebildet sein können, sind aus dem Stand der Technik beispielsweise Rohrschellen bekannt, mit denen ein das Mantelrohr umgebender Hülsenabschnitt des Lenksäulenmoduls am Mantelrohr befestigt wird. Außerdem ist es bekannt, das Lenksäulenmodul durch direktes Verschrauben in die Lenksäule, beispielsweise durch Vorsehen von Gewindebohrungen im Mantelrohr, zu befestigen.

Aus der EP 1 213 180 A2 ist ein Lenkstockschalter gemäß dem Oberbegriff des Anspruchs 1 bekannt geworden. Andere Lenksäulenmodule sind aus der DE 102 44 245 A1, der DE 102 59 167 B3 und der EP 1 418 111 A2 bekannt.

Die bekannten Möglichkeiten der Befestigung des Lenksäulenmoduls am Mantelelement haben insbesondere den Nachteil, dass ein exakt axiales Anordnen des Lenksäulenmoduls am Mantelelement, ohne einen unerwünschten radialen Versatz, nicht, oder nur mit sehr hohem Aufwand, möglich ist. Eine einseitige Krafteinwirkung, wie sie beispielsweise bei der Verwendung einer Rohrschelle auftritt, führt zu einem Verkippen oder Verschieben des Moduls bezüglich der Lenkwelle.

Der vorliegenden Erfindung liegt deshalb die Aufgabe zugrunde, ein Lenksäulenmodul der eingangs genannten Art vorzuschlagen, bei dem eine einfache Befestigung an dem Mantelelement möglich ist. Dabei soll insbesondere ein radialer Versatz ausgeschlossen sein.

Diese Aufgabe wird durch ein Lenksäulenmodul mit den Merkmalen des Anspruchs 1 gelöst. Hierdurch wird erreicht, dass ein Befestigen des Lenksäulenmoduls am Mantelelement möglich ist, ohne dass Querkräfte auftreten, die ein Verkippen oder Verschieben des Lenksäulenmoduls bezüglich der Längsachse der Lenkwelle bewirken. Das Lenksäulenmodul wird folglich bei der Montage nicht verkippt. Ferner können Toleranzen, die insbesondere in axialer Richtung gerichtet sind, durch den insbesondere keilartig ausgebildeten Spannabschnitt ausgeglichen werden.

Ferner ist erfindungsgemäß vorgesehen, dass am Spannmittel und/oder am Lenksäulenmodul wenigstens eine Einführungsaussparung vorgesehen ist, in die in der Einführlage der Befestigungsabschnitt eintauchen kann und dass in der Befestigungslage der Spannabschnitt den Befestigungsabschnitt insbesondere hintergreift. Beim axialen Aufschieben des Lenksäulenmoduls auf das Mantelelement können folglich die mantelelementseitigen Befestigungsabschnitte in die Einführaussparungen gelangen. Zur Verriegelung wird in der Befestigungslage das Spannmittel derart verschoben, dass der Spannabschnitt die Einführaussparung verschließt und damit den Befestigungsabschnitt hintergreift. Der Befestigungsabschnitt wird dann über den Spannabschnitt gegen einen entsprechenden Gehäuseabschnitt verspannt beaufschlagt.

Vorteilhafterweise kann vorgesehen sein, dass das Spannmittel in Draufsicht als U-förmiges, also einseitig offenes, oder als geschlossenes, also eine zentrale Aussparung aufweisendes, Bauteil, und insbesondere als Blechteil, ausgebildet ist. Dies hat den Vorteil, dass das Spannmittel als günstiges, und doch stabiles und belastbares Bauteil ausgeführt ist.

Dabei kann der Spannabschnitt oder können die Spannabschnitte aus der Ebene des Blechteils hervorstehend, federnd nachgiebig ausgebildet sein. Die Verwendung eines Blechteils hat dabei den Vorteil, dass durch entsprechendes Abbiegen der Spannabschnitte eine elastische, federnde Nachgiebigkeit erzielt werden kann. Das Spannmittel kann allerdings erfindungsgemäß auch aus Kunststoff oder aus einem anderen Material sein.

Vorteilhafterweise kann das Spannmittel von der Einführlage in die Befestigungslage, und/oder umgekehrt, durch ein bewegbares Verschiebemittel gelangen. Durch das Verschiebemittel können beispielsweise definierte Kräfte zur Verschiebung des Spannmittels bereitgestellt werden. Außerdem kann das Spannmittel insbesondere in der Befestigungslage durch das Verschiebemittel gehalten werden.

Als Verschiebemittel hat sich insbesondere eine Stellschraube als vorteilhaft herausgestellt. Dabei ist denkbar, dass der Schraubenkopf der Stellschraube in axialer Richtung im Gehäuse des Lenksäulenmoduls gefangen angeordnet ist und dass das Spannmittel ein Gewinde für die Stellschraube aufweist. Beim Verdrehen der Stellschraube bewegt sich die Stellschraube folglich bezüglich des Gehäuses nicht; das Spannmittel wird quer zur Längsachse der Lenkwelle bewegt. Bei einer Ausbildung, bei der das Spannmittel als Blechteil vorliegt, kann das Blechteil einen senkrecht aus der Ebene des Blechteils abgebogenen Gewindeabschnitt aufweisen, in den die Stellschraube eingreift.

Erfindungsgemäß kann vorgesehen sein, dass das Verschiebemittel als umlegbares Hebelelement ausgebildet ist, das durch Umlegen das Spannmittel von der Einführlage in die Befestigungslage überführt. Ein derartiges Hebelelement hat den Vorteil, dass bei umgelegtem Hebel eine definierte Endlage, nämlich die Befestigungslage des Spannmittels erreichbar ist. Außerdem können aufgrund des Hebelelements, und des damit zusammenhängenden Hebels, entsprechende Kräfte zum Verschieben des Spannmittels in die Befestigungslage, und aus der Befestigungslage in die Einführlage, bereitgestellt werden.

Gemäß einer weiteren Ausführungsform der Erfindung weist das Gehäuse des Lenksäulenmoduls einen Zentrierabschnitt auf, der zur radialen Zentrierung des Lenksäulenmoduls in der Befestigungslage an einer mantelelementseitigen Zentrierung anliegt. Der Zentrierabschnitt ist vorteilhafterweise auf der der Spannmittelaufnahme abgewandten Seite des Gehäuses des Lenksäulenmoduls. Der Zentrierabschnitt kann dabei als Kreisausschnitt am zentralen Durchbruch ausgebildet sein, wobei dann die Zentrierung als mantelelementseitiger, die Lenkwelle umgebender, Ringbund ausgebildet sein kann. In der Befestigungslage umgreift dann der Kreisausschnitt den Ringbund wenigstens weitgehend passgenau.

Ferner kann erfindungsgemäß vorgesehen sein, dass das Spannmittel einen in der Befestigungslage in eine mantelelementseitige Ausnehmung eintauchenden Zapfen aufweist. Der Zapfen kann dabei quer zur Längsachse der Lenkwelle angeordnet sein. Dies hat den Vorteil, dass ein Bewegen des Spannmittels in die Befestigungslage nur dann möglich ist, wenn der Zapfen in die mantelelementseitige Ausnehmung eintaucht. Ein Montieren des Lenksäulenmoduls ist folglich nur in dieser einen Montagelage, in der der Zapfen in die Ausnehmung eintaucht, möglich.

Ferner kann erfindungsgemäß ein Ausgleichselement zur Anordnung zwischen dem Lenksäulenmodul und dem Spannmittel vorgesehen sein, wobei das Ausgleichselement entweder oberhalb oder unterhalb des Spannmittels anordenbar ist. Hierdurch kann ein Höhenausgleich des Lenksäulenmoduls am Mantelelement erreicht werden. Je nach Anordnung des Ausgleichselements oberhalb oder unterhalb des Spannmittels kann das Lenksäulenmodul in unterschiedlicher axialer Lage am Mantelelement befestigt werden.

Die Erfindung betrifft außerdem ein Mantelelement zur Befestigung eines erfindungsgemäßen Lenksäulenmoduls sowie eine Lenksäulenmodul-Mantelelement-Einheit, die ein erfindungsgemäßes Lenksäulenmodul umfasst.

Weitere Merkmale und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: ein erfindungsgemäßes Lenksäulenmodul samt Spannmittel und Ausgleichselement;
- Figur 2: die Unteransicht des Lenkstockmoduls gemäß Figur 1 mit dem Spannmittel in der Einführlage;
- Figur 3: ein Mantelelement, an dem das Lenksäulenmodul gemäß Figur 1 und 2 angeordnet werden kann;
- Figur 4: einen Längsschnitt durch das Lenksäulenmodul gemäß Figur 1 und 2 in der Einführlage;
- Figur 5: eine Ansicht gemäß Figur 4 in der Befestigungslage;
- Figur 6: eine Unteransicht des Lenksäulenmoduls in der Befestigungslage;
- Figur 7: einen Schnitt durch das Lenksäulenmodul gemäß Figur 6 entlang der Linie VII;
- Figur 8: eine Teilschnittdarstellung durch eine Ausgestaltungsform der Erfindung, die ein Hebelelement zum Überführen des Spannmittels aus der Einführlage in die Befestigungslage aufweist, wobei die Figur 8 die Einführlage darstellt;
- Figur 9: die Ausführungsform gemäß Figur 8, wobei der Hebel in der Befestigungslage angeordnet ist; und
- Figur 10: die Ausführungsform gemäß Figur 8 und 9 in perspektivischer Ansicht von schräg unten.

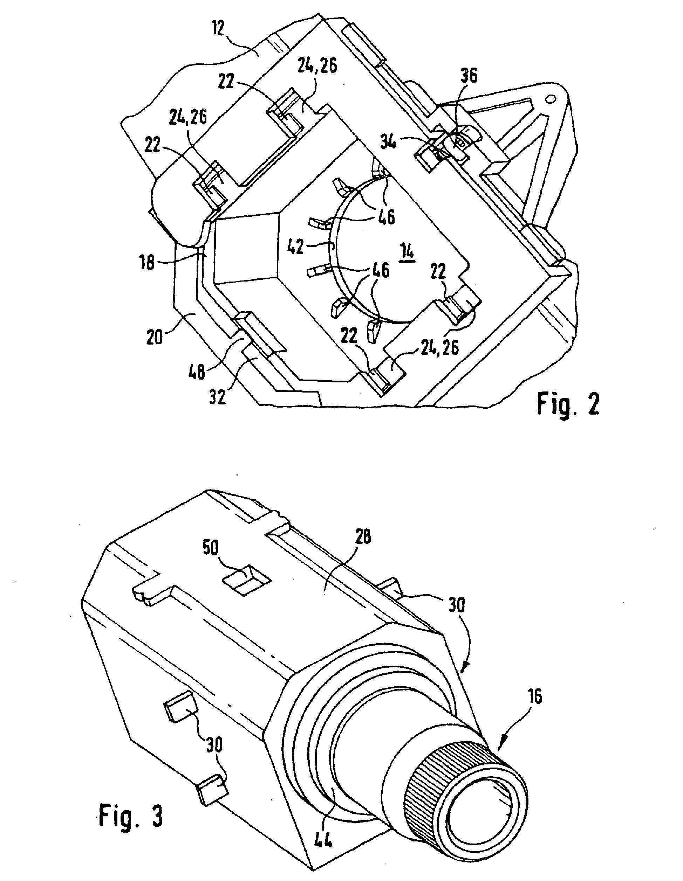

Das in den Figuren dargestellte Lenksäulenmodul 10 umfasst ein Gehäuse 12, das eine zentrale Aussparung 14 aufweist, die im verbauten Zustand des Lenksäulenmoduls zur Aufnahme einer in der Figur 3 dargestellten Lenkwelle 16 dient. Am freien Ende der Lenkwelle 16 kann beispielsweise das Lenkrad eines Kraftfahrzeugs angeordnet sein.

Das Lenksäulenmodul 10 dient als solches zur Aufnahme von insbesondere Lenkstockschaltern sowie von mechanischen und/oder elektrischen Schalterbauteilen. Ferner können am oder im Lenksäulenmodul weitere Bauteile angeordnet sein, wie beispielsweise Lenkwinkelsensoren und/oder Wickelfedereinheiten, zur Übertragung von Signalen vom drehbar gelagerten Lenkrad zum der Drehbewegung des Lenkrads nicht folgenden Lenksäulenmodul.

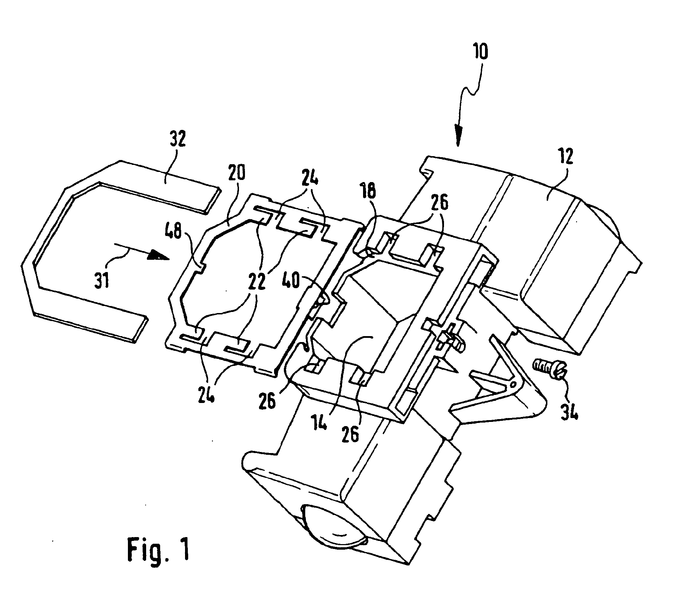

Das Lenksäulenmodul 10 sieht eine Spannmittelaufnahme 18 vor, in die quer zur Längsachse der zentralen Aussparung 14, beziehungsweise der Lenkwelle 16, ein Spannmittel in Form eines Blechteils 20 eingeschoben werden kann. Aus der Figur 1 wird deutlich, dass das Blechteil 20 in Draufsicht geschlossen ausgebildet ist. Das Blechteil 20 sieht insgesamt vier Spannabschnitte 22 vor, die aus der Ebene des Blechteils hervorstehen und elastisch federnd nachgiebig ausgebildet sind. Am Blechteil 20 sind benachbart zu den jeweiligen Spannabschnitten 22 Einführaussparungen 24 vorgesehen. Am Gehäuse 12 sind entsprechende Einführaussparungen 26 vorgesehen.

Vor der Montage des Lenksäulenmoduls 10 an einem in der Figur 3 dargestellten, die Lenkwelle 16 umgebenden Mantelelement 28, wird das Spannmittel 20 gemäß Figur 1 in Richtung des Pfeils 31 in die schlitzartig ausgebildete Spannmittelaufnahme 18 seitlich eingeschoben. Diesen Zustand zeigt die Figur 2. Die blechteilseitigen Einführaussparungen 24 und die gehäuseseitigen Einführaussparungen 26 liegen hierbei axial übereinander. In dieser, in der Figur 2 gezeigten Einführlage, kann das Lenksäulenmodul 10 auf das Mantelelement 28 axial aufgesetzt werden.

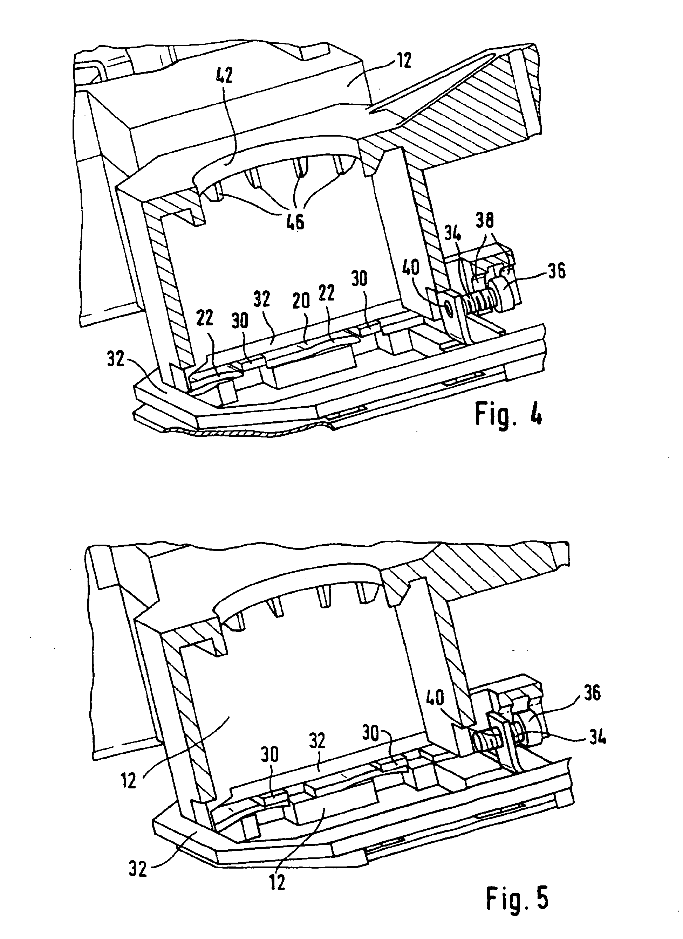

Wie aus der Figur 3 deutlich wird, sind am Mantelelement 28 insgesamt vier laschenartige, abstehende Befestigungsabschnitte 30 vorgesehen. Beim Aufsetzen des Lenksäulenmoduls 10 auf das Mantelelement 28, das beispielsweise als Mantelrohr ausgebildet sein kann und/oder ein Kugellager für die Lenkwelle 16 beinhalten kann, werden die Befestigungsabschnitte 30 in die Einführaussparungen 24, 26 soweit eingeführt, bis sie in der Spannmittelaufnahme 18 zum Aufliegen kommen. Dies ist im Schnitt der Figur 4 deutlich zu erkennen, wobei lediglich die Befestigungsabschnitte 30 des Mantelelements, und nicht das gesamte Mantelelement dargestellt ist.

In der in Figur 5 gezeigten Befestigungslage ist das Spannmittel 20 in einer im Vergleich zur Figur 4 nach rechts verschobenen Befestigungslage. In dieser Befestigungslage beaufschlagen die Spannabschnitte 22 die ihr jeweils zugeordneten Befestigungsabschnitte 30 gegen das Gehäuse 12, beziehungsweise gegen ein zwischen dem Gehäuse 12 und dem Blechteil 20 vorgesehenen Ausgleichselement 32.

Das Ausgleichselement 32 ist, wie in Figur 1 deutlich wird, U-förmig ausgebildet und kann ebenfalls ein Blechteil sein. Durch das Ausgleichselement 32 kann ein Höhenausgleich im Hinblick auf die axiale Anordnung des Längssäulenmoduls 10 am Mantelelement 28 erreicht werden. Das Ausgleichselement 32 wird mit in die Einführaussparung 28 eingeführt. Es kann dabei, wie in den Figuren dargestellt, entweder oberhalb, oder wie in den Figuren nicht dargestellt, unterhalb des Spannmittels 20 angeordnet sein.

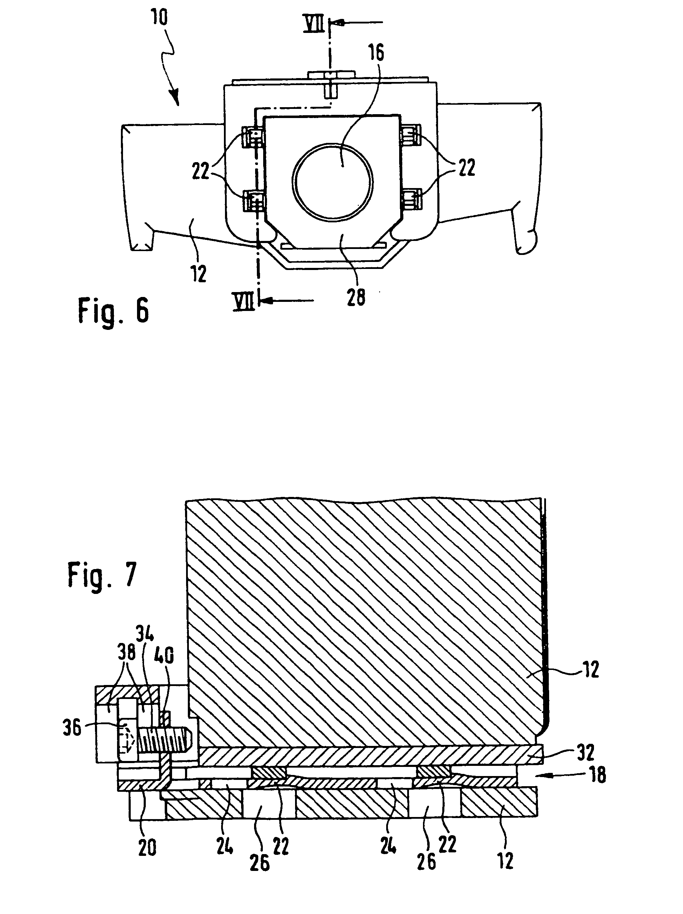

Zum Verschieben des Spannmittels 20 aus der Einführlage in die Befestigungslage ist ein Verschiebemittel in Form einer Stellschraube 34 vorgesehen. Die Stellschraube 34 ist dabei so angeordnet, dass ihr Schraubenkopf 36 in axialer Richtung im Gehäuse 12 aufgrund zweier Gehäusestege 38 gefangen angeordnet ist. Das Gewinde der Stellschraube 34 greift in einen Gewindeabschnitt 40 am Blechteil 20 ein, wobei der Gewindeabschnitt 40 senkrecht aus der Ebene des Blechteils abgebogen ist. Beim Einschrauben der Stellschraube 34 in den Gewindeabschnitt 40 wird folglich das Spannmittel 20 quer zur Längsachse der Lenkwelle 16 derart verschoben, dass die Befestigungsabschnitte 30 über die Spannabschnitte 22 am Gehäuse 12 verspannt gehalten werden. Entsprechendes ist im Schnitt der Figur 7 gezeigt. Zur radialen Zentrierung des Lenksäulenmoduls 10 am Mantelelement 28 sieht das Lenksäulenmodul einen Zentrierabschnitt in Form eines Kreisausschnittes 42 vor, der in der Figur 2 teilweise zu erkennen ist. Der Kreisausschnitt 42 umgibt im montierten Zustand eine mantelelementseitige Zentrierung in Form eines umlaufenden Ringbundes. Zur Zentrierung sind außerdem auf der in der Figur 2 gezeigten Innenseite des Gehäuses 12 an den Kreisausschnitt 42 angrenzend Ausgleichsrippen 46 vorgesehen.

Um ein eindeutiges Montieren des Lenksäulenmoduls 10 am Mantelelement 28 zu gewährleisten, ist außerdem vorgesehen, dass das Blechteil 20 einen nach radial innen ragenden Zapfen 48 aufweist, der insbesondere in der Figur 1 und der Figur 2 deutlich zu erkennen ist. In der Befestigungslage taucht der Zapfen 42 in eine mantelelementseitige Ausnehmung 50 ein, die insbesondere in der Figur 3 deutlich zu erkennen ist.

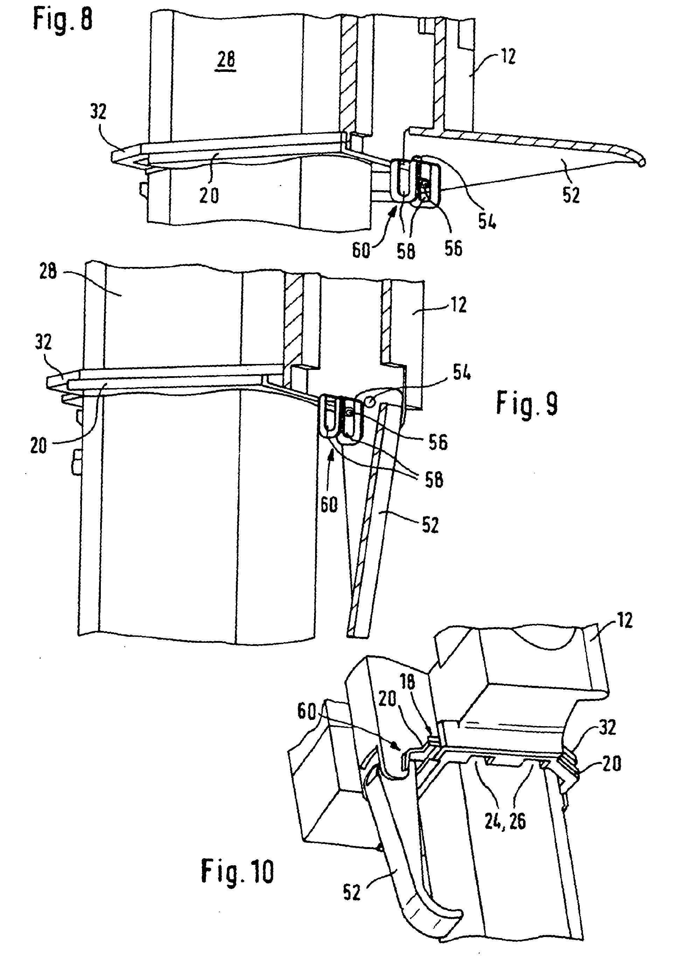

In den Figuren 8 bis 10 ist eine Ausführungsform der Erfindung dargestellt, die im Gegensatz zu der Ausführungsform gemäß den Figuren 1 bis 7 als Verschiebemittel zum Bewegen des Spannmittels 20 keine Stellschraube, sondern ein Hebelelement 52 vorsieht. In den Figuren 8 bis 10 sind die den Figuren 1 bis 7 entsprechenden Bauteile mit entsprechenden Bezugszeichen versehen.

Das Hebelelement 52 sieht eine Lagerstelle 54 vor, über die es schwenkbar am Gehäuse 12 angeordnet ist. Ferner sieht es Stellnocken 56 vor, die in spannmittelseitige, weitgehend parallel zur Achse der Lenkwelle verlaufende Kulissen 58 eingreifen. Die Kulissen 58 werden von einem Kulissenabschnitt 60 des Blechteils 20 gebildet, der durch Abkanten von entsprechenden, die Kulissen 58 aufweisenden Laschen realisiert ist.

Wie aus dem Teilschnitt gemäß Figur 8 hervorgeht, ist in der Einführlage das Hebelelement 52 ausgelenkt; aufgrund der in die Kulissen 58 eingreifenden Stellnocken befindet sich das Blechteil 20 in der Einführlage. Wird das Hebelelement 52 gemäß Figur 5 um die Lagerstelle 54 verschwenkt, so wird aufgrund des Zusammenwirkens der Stellnocken 56 und der Kulissen 58 das Blechteil 20 in die Befestigungslage, wie sie in der Figur 9 dargestellt ist, verschoben. Aufgrund des vergleichsweise geringen Abstandes der Lagerstelle 54 zu den Stellnocken 56 und des vergleichsweise dazu lang ausgebildeten Hebelelements 52, kann eine vergleichsweise hohe Kraft zum Bewegen des Blechteils 20 in die Befestigungslage bereitgestellt werden.

Das in den Figuren dargestellte Lenksäulenmodul hat insbesondere den Vorteil, dass beim Einschrauben der Stellschraube 34 das Lenksäulenmodul 10 am Mantelelement 28 durch Verspannen derart befestigt wird, dass das Lenksäulenmodul 10 seine vorgegebene Lage in radialer Richtung bezüglich der Längsachse der Lenkwelle 16 nicht verändert. Aufgrund der axialen Verspannung können außerdem vorhandene axiale Toleranzen ausgeglichen werden.

## Patentansprüche

1. Lenksäulenmodul (10) zur Anordnung am Lenkstock eines Fahrzeugs, mit einer im Gehäuse (12) des Lenksäulenmoduls (10) angeordneten zentralen axialen Aussparung (14) für ein die Lenkwelle (16) wenigstens abschnittsweise umgebendes Mantelelement (28), wobei das Lenksäulenmodul (10) eine Spannmittelaufnahme (18) und ein in der Spannmittelaufnahme (18) quer zur Lenkwellenachse in eine Einführlage und eine Befestigungslage bewegbares Spannmittel (20)aufweist, wobei in der Einführlage ein Einführen des Mantelelements (28) in die zentrale Aussparung (14) möglich ist und in der Befestigungslage das Lenksäulenmodul (10) gegen einen am Mantelelement (28) angeordneten Befestigungsabschnitt (30) verspannt wird, **dadurch gekennzeichnet, dass** am Spannmittel (20) und am Lenksäulenmodul (10) jeweils wenigstens eine Einführaussparung (24 und 26) vorgesehen sind, die in der Einführlage so axial übereinander liegen, dass beim axialen Aufschieben des Lenksäulenmoduls (10) auf das Mantelelement (28) der wenigstens eine Befestigungsabschnitt (30) des Mantelelements (28) in die Einführaussparung (24 und 26) eintauchen kann bis er in einer Spannmittelaufnahme (18) zum Anliegen kommt, und dass beim Verschieben des Spannmittels (20) quer zur Lenkwellenachse in die Befestigungslage ein am Spannmittel (20) vorgesehner Spannabschnitt (22) die Einführaussparung (24) des Lenksäulenmoduls (10) axial verschließt und damit den Befestigungsabschnitt (30) so hintergreift, dass der Spannabschnitt (22) den Befestigungsabschnitt axial (30) beaufschlagt.

2. Lenksäulenmodul (10) nach Anspruch 1, **dadurch gekennzeichnet, dass** das Spannmittel (20) in Draufsicht insbesondere als U-förmiges, also einseitig offenes, oder als geschlossenes, also eine zentrale Aussparung aufweisendes, Bauteil, ist.

3. Lenksäulenmodul (10) nach Anspruch 1 oder 2, **dadurch gekennzeichnet, dass** das Spannmittel (20) als Blechteil ausgebildet ist.

4. Lenksäulenmodul (10) nach Anspruch 1, 2 oder 3,
**dadurch gekennzeichnet, dass** der Spannabeschnitt (22) oder die Spannabschnitte (22) aus der Ebene des Bauteils (20) hervorstehend, federnd nachgiebig ausgebildet sind.

5. Lenksäulenmodul (10) nach einem der vorhergehenden Ansprüche, **dadurch gekennzeichnet, dass** das Spannmittel (20) mittels eines Verschiebemittels (34) von der Einführlage in die Befestigungslage, und/oder umgekehrt, bewegbar ist.

6. Lenksäulenmodul (10) nach Anspruch 5, **dadurch gekennzeichnet, dass** das Verschiebemittel (34) als eine Stellschraube ausgebildet ist.

7. Lenksäulenmodul (10) nach Anspruch 6, **dadurch gekennzeichnet, dass** die der Schraubenkopf (36) der Stellschraube (34) in axialer Richtung im Gehäuse (12) des Lenksäulenmoduls (10) gefangen angeordnet ist und dass das Spannmittel (20) ein Gewinde (40) für die Stellschraube (34) aufweist.

8. Lenksäulenmodul (10) nach Anspruch 5, **dadurch gekennzeichnet, dass** das Verschiebemittel als umlegbares Hebelelement (52) ausgebildet ist, das durch Umlegen das Spannmittel (20) von der Einführlage in die Befestigungslage überführt.

9. Lenksäulenmodul (10) nach einem der vorhergehenden Ansprüche, **dadurch gekennzeichnet, dass** das Gehäuse (12) des Lenksäulenmoduls (10) einen Zentrierabschnitt (42) aufweist, der zur radialen Zentrierung des Lenksäulenmoduls in der Befestigungslage an einer mantelelementseitigen Zentrierung (44) anliegt.

10. Lenksäulenmodul (10) nach Anspruch 9, **dadurch gekennzeichnet, dass** der Zentrierabschnitt (42) als Kreisausschnitt am zentralen Durchbruch (14) und dass die Zentrierung als mantelelementseitiger, die Lenkwelle (16) umgebender Ringbund (44) ausgebildet ist.

11. Lenksäulenmodul (10) nach einem der vorhergehenden Ansprüche, **dadurch gekennzeichnet, dass** das Spannmittel (20) einen in der Befestigungslage in eine mantelelementseitige Ausnehmung (50) eintauchenden Zapfen (48) aufweist.

12. Lenksäulenmodul (10) nach einem der vorhergehenden Ansprüche, **dadurch gekennzeichnet, dass** ein Ausgleichselement (32) zur Anordnung zwischen dem Lenksäulenmodul (10) und dem Spannmittel (20) vorgesehen ist, wobei das Ausgleichselement (32) entweder oberhalb oder unterhalb des Spannmittels (20) anordenbar ist.

13. Mantelelement (28) zur eine Lenkwelle (16) wenigstens abschnittsweise umgebenden achsparallelen Anordnung an den Lenkstock eines Fahrzeugs, mit Befestigungsabschnitten (30), die derart ausgebildet sind, dass sie in einer Einführlage eines Lenksäulenmoduls (10) nach einem der vorhergehenden Ansprüche in axial übereinander liegende Einführaussparungen (24 und 26) des Lenksäulenmoduls (10) und eines Spannmittels (20) soweit einführbar sind, bis sie in einer Spannmittelaufnahme (18) zum Anliegen kommen, und dass sie in einer Befestigungslage durch Spannabschnitte (22) des quer zur Lenkwellenachse verschieblichen Spannmittels (20) axial beaufschlagbar sind.

14. Lenksäulenmodul-Mantelelement-Einheit umfassend ein Mantelelement (28) nach dem vorhergehenden Anspruch und ein an dem Mantelelement anordenbares Lenksäulenmodul (10) nach einem der Ansprüche 1 bis 12.

## Claims

1. Steering-column module (10) for arrangement on the steering-column assembly of a vehicle, having a central axial cut-out (14) which is arranged in the housing (12) of the steering-column module (10) for a casing element (28) which surrounds the steering shaft (16) at least in sections, the steering-column module (10) having a clamping-means receptacle (18) and a clamping means (20) which can be moved in the clamping-means receptacle (18) transversely with respect to the steering-shaft axis into an insertion position and a fastening position, insertion of the casing element (28) into the central cut-out (14) being possible in the insertion position and the steering-column module (10) being clamped in the fastening position against a fastening section (30) which is arranged on the casing element (28), **characterized in that** in each case at least one insertion cut-out (24 and 26) is provided on the clamping means (20) and on the steering-column module (10), which insertion openings (24 and 26) lie axially above one another in the insertion position in such a way that, when the steering-column module (10) is pushed axially onto the casing element (28), the at least one fastening section (30) of the casing element (28) can dip into the insertion cut-out (24 and 26) until it comes to bear in a clamping-means receptacle (18), and that, when the clamping means (20) is displaced transversely with respect to the steering-shaft axis into the fastening position, a clamping section (22) which is provided on the clamping means (20) axially closes the insertion cut-out (24) of the steering-column module (10) and in doing so engages behind the fastening section (30) in such a way that the clamping section (22) loads the fastening section (30) axially.

2. Steering-column module (10) according to Claim 1, **characterized in that**, in plan view, the clamping means (20) is, in particular, a U-shaped component, that is to say open on one side, or as a closed component, that is to say having a central cut-out.

3. Steering-column module (10) according to Claim 1 or 2, **characterized in that** the clamping means (20) is configured as a sheet-metal part.

4. Steering-column module (10) according to Claim 1, 2 or 3, **characterized in that** the clamping section (22) or the clamping sections (22) is/are configured to project out of the plane of the component (20) in a resiliently compliant manner.

5. Steering-column module (10) according to one of the preceding claims, **characterized in that** the clamping means (20) can be moved by means of a displacement means (34) from the insertion position into the fastening position, and/or vice versa.

6. Steering-column module (10) according to Claim 5, **characterized in that** the displacement means (34) is configured as a setting screw.

7. Steering-column module (10) according to Claim 6, **characterized in that** the screw head (36) of the setting screw (34) is arranged such that it is captive in the axial direction in the housing (12) of the steering-column module (10), and **in that** the clamping means (20) has a thread (40) for the setting screw (34).

8. Steering-column module (10) according to Claim 5, **characterized in that** the displacement means is configured as a movable lever element (52) which, by moving, transfers the clamping means (20) from the insertion position into the fastening position.

9. Steering-column module (10) according to one of the preceding claims, **characterized in that** the housing (12) of the steering-column module (10) has a centring section (42) which bears against a centring means (44) on the casing element side for radially centring the steering-column module in the fastening position.

10. Steering-column module (10) according to Claim 9, **characterized in that** the centring section (42) is configured as a circular cut-out at the central aperture (14), and **in that** the centring means is configured as an annular collar (44) on the casing element side which surrounds the steering shaft (16).

11. Steering-column module (10) according to one of the preceding claims, **characterized in that** the clamping means (20) has a journal (48) which dips into a recess (50) on the casing element side in the fastening position.

12. Steering-column module (10) according to one of the preceding claims, **characterized in that** a compensation element (32) is provided for arrangement between the steering-column module (10) and the clamping means (20), it being possible for the compensation element (32) to be arranged either above or below the clamping means (20).

13. Casing element (28) for the axially parallel arrangement on the steering-column assembly of a vehicle such that it surrounds a steering shaft (16) at least in sections, having fastening sections (30) which are configured in such a way that, in an insertion position of a steering-column module (10) according to one of the preceding claims, they can be inserted into insertion openings (24 and 26) of the steering-column module (10) and a clamping means (20) which lie axially over one another, until the said fastening sections (30) come to bear in a clamping-means receptacle (18), and that they can be loaded axially in a fastening position by clamping sections (22) of the clamping means (20) which can be displaced transversely with respect to the steering-shaft axis.

14. Steering-column module/casing element unit comprising a casing element (28) according to the preceding claim and a steering-column module (10) according to one of Claims 1 to 12 which can be arranged on the casing element.

## Revendications

1. Module de colonne de direction (10) destiné à être disposé au niveau de la barre de direction d'un véhicule, comprenant un évidement axial central (14) disposé dans le boîtier (12) du module de colonne de direction (10) pour un élément d'enveloppe (28) entourant l'arbre de direction (16) au moins en partie, le module de colonne de direction (10) présentant un logement de moyen de serrage (18) et un moyen de serrage (20) pouvant être déplacé transversalement à l'axe de l'arbre de direction dans une position d'insertion et une position de fixation dans le logement de moyen de serrage (18), l'élément d'enveloppe (28) pouvant être inséré dans l'évidement central (14) dans la position d'insertion et le module de colonne de direction (10) étant serré dans la position de fixation contre une portion de fixation (30) disposée au niveau de l'élément d'enveloppe (28), **caractérisé en ce qu'**au moins un évidement d'insertion respectif (24 et 26) est prévu sur le moyen de serrage (20) et sur le module de colonne de direction (10) respectivement, ceux-ci se situant l'un au-dessus de l'autre axialement dans la position d'insertion de telle sorte que lors du déplacement axial du module de colonne de direction (10) sur l'élément d'enveloppe (28), l'au moins une portion de fixation (30) de l'élément d'enveloppe (28) puisse plonger dans l'évidement d'insertion (24 et 26) jusqu'à venir en appui dans un logement de moyen de serrage (18), et **en ce que** lors du déplacement du moyen de serrage (20) transversalement à l'axe de l'arbre de direction dans la position de fixation, une portion de serrage (22) prévue au niveau du moyen de serrage (20) ferme axialement l'évidement d'insertion (24) du module de colonne de direction (10) et vient en prise par l'arrière avec la portion de fixation (30) de telle sorte que la portion de serrage (22) sollicite axialement la portion de fixation (30).

2. Module de colonne de direction (10) selon la revendication 1, **caractérisé en ce que** le moyen de serrage (20) est un composant en vue de dessus notamment en forme de U, c'est-à-dire ouvert d'un côté, ou fermé, c'est-à-dire présentant un évidement central.

3. Module de colonne de direction (10) selon la revendication 1 ou 2, **caractérisé en ce que** le moyen de serrage (20) est réalisé en tant que pièce de tôle.

4. Module de colonne de direction (10) selon la revendication 1, 2 ou 3, **caractérisé en ce que** la portion de serrage (22) ou les portions de serrage (22) sont réalisées de manière flexible élastiquement et font saillie hors du plan du composant (20).

5. Module de colonne de direction (10) selon l'une quelconque des revendications précédentes, **caractérisé en ce que** le moyen de serrage (20) peut être déplacé au moyen d'un moyen de déplacement (34) de la position d'insertion dans la position de fixation, et/ou inversement.

6. Module de colonne de direction (10) selon la revendication 5, **caractérisé en ce que** le moyen de déplacement (34) est réalisé sous forme de vis de réglage.

7. Module de colonne de direction (10) selon la revendication 6, **caractérisé en ce que** la tête de vis (36) de la vis de réglage (34) est disposée de manière reçue dans la direction axiale dans le boîtier (12) du module de colonne de direction (10) et **en ce que** le moyen de serrage (20) présente un filetage (40) pour la vis de réglage (34).

8. Module de colonne de direction (10) selon la revendication 5, **caractérisé en ce que** le moyen de déplacement est réalisé sous forme d'élément de levier commutable (52) qui, par commutation, transfère le moyen de serrage (20) de la position d'insertion dans la position de fixation.

9. Module de colonne de direction (10) selon l'une quelconque des revendications précédentes, **caractérisé en ce que** le boîtier (12) du module de colonne de direction (10) présente une portion de centrage (42) qui, pour le centrage radial du module de colonne de direction dans la position de fixation, s'applique contre un centrage (44) du côté de l'élément d'enveloppe.

10. Module de colonne de direction (10) selon la revendication 9, **caractérisé en ce que** la portion de centrage (42) est réalisée sous forme de section circulaire au niveau de l'orifice central (14) et **en ce que** le centrage est réalisé sous forme d'épaulement annulaire (44) du côté de l'élément d'enveloppe, entourant l'arbre de direction (16).

11. Module de colonne de direction (10) selon l'une quelconque des revendications précédentes, **caractérisé en ce que** le moyen de serrage (20) présente un tourillon (48) plongeant dans la position de fixation dans un évidement (50) du côté de l'élément d'enveloppe.

12. Module de colonne de direction (10) selon l'une quelconque des revendications précédentes, **caractérisé en ce qu'**un élément d'équilibrage (32) est prévu de manière à être disposé entre le module de colonne de direction (10) et le moyen de serrage (20), l'élément d'équilibrage (32) pouvant être disposé soit au-dessus soit en-dessous du moyen de serrage (20).

13. Elément d'enveloppe (28) destiné à être disposé de manière à entourer avec son axe parallèle un arbre de direction (16) au moins en partie sur la barre de direction d'un véhicule, comprenant des portions de fixation (30) qui sont réalisées de telle sorte que dans une position d'insertion d'un module de colonne de direction (10) selon l'une quelconque des revendications précédentes, elles puissent être insérées dans des évidements d'insertion (24 et 26), situés l'un au-dessus de l'autre axialement, du module de colonne de direction (10) et d'un moyen de serrage (20) jusqu'à ce qu'elles parviennent en appui dans un logement de moyen de serrage (18), et que dans une position de fixation elles puissent être sollicitées axialement par des portions de serrage (22) du moyen de serrage (20) déplaçable transversalement par rapport à l'axe de l'arbre de direction.

14. Unité de module de colonne de direction et d'élément d'enveloppe, comprenant un élément d'enveloppe (28) selon la revendication précédente et un module de colonne de direction (10) pouvant être disposé sur l'élément d'enveloppe selon l'une quelconque des revendications 1 à 12.
